# EUROPÄISCHE PATENTANMELDUNG

(11) **EP 2 151 792 A2**
(43) Veröffentlichungstag der Anmeldung: **10.02.2010**
(21) Anmeldenummer: 09166108.2
(22) Anmeldetag: 22.07.2009
(51) Int. Cl.: G06Q 10/00

(54) **Verfahren und Netzübergangseinrichtung zum Übermitteln einer Information**

(30) Priorität: 30.07.2008 DE 102008035545
(71) Anmelder: Gigaset Communications GmbH, 81379 München (DE)
(72) Erfinder: Bigalke, Olaf, 58638 Iserlohn (DE)
(74) Vertreter: Schulz, Dirk

(57) **Zusammenfassung**

Die Erfindung betrifft ein Verfahren zum Übermitteln einer Information an ein für Sprachkommunikation vorgesehenes Mobilteil (M1), das zusammen mit einer Netzübergangseinrichtung (B) ein Telekommunikationssystem für drahtungebundene Sprachkommunikation bildet. Dabei wird der Netzübergangseinrichtung (B) eine Zeitinformation und eine semantische Information über ein Datennetzwerk (IPN) übermittelt. Weiterhin wird eine Auswertung auf Grundlage der gespeicherten Zeitinformation und einer Referenzzeitinformation durchgeführt, wobei bei positivem Auswertungsergebnis durch die Netzübergangseinrichtung (B) das betroffene Mobilteil (M1) ermittelt wird und von der Netzübergangseinrichtung (B) eine die Zeitinformation und die semantische Information betreffende Nachricht (FV) über ein für die drahtlose Sprachkommunikation vorgesehenes Funknetzwerk an das Mobilteil (M1) zur Ausgabe der semantischen Information übermittelt wird. Weiterhin betrifft die Erfindung eine Netzübergangseinrichtung zur Durchführung des Verfahrens.

## Beschreibung

Die Erfindung betrifft ein Verfahren zum Übermitteln einer Information an ein für Sprachkommunikation vorgesehenes Mobilteil gemäß dem Gattungsbegriff nach Anspruch 1 und eine Netzübergangseinrichtung gemäß dem Gattungsbegriff nach Anspruch 15, wobei die Netzübergangseinrichtung zusammen mit dem Mobilteil ein Telekommunikationssystem für drahtungebundene Sprachkommunikation bildet.

Zur Verwaltung von Terminen und zur Erinnerung eines Benutzers an in Kürze auftretende Termine sind so genannte PIM-Anwendungen (PIM: Personal Information Management) vorgesehen. Mittels dieser können durch einen Benutzer an einem Endgerät neue Termine eingetragen werden, die dann später über dasselbe Endgerät abgefragt oder verändert werden können. Ein Termin besteht dabei im Wesentlichen aus einer Zeitinformation, wann der Termin beginnt und endet, sowie aus einem beschreibenden Text zu dem Termin. Darüber hinaus bieten diese PIM-Anwendungen üblicherweise die Möglichkeit anzugeben, ob sich ein Anwender vor dem Beginn des Termins an diesen durch die PIM-Anwendung erinnern lassen möchte und wie lang der zeitliche Vorlauf für die Erinnerung vor dem Termin sein soll - beispielweise eine Stunde vor dem eigentlichen Termin.

Termine können darüber hinaus die Verwendung von technischen Ressourcen betreffen, wie die Reservierung eines Telefon-Konferenz-Servers für eine Telefonkonferenz zu einem bestimmten Zeitpunkt für bestimmte Konferenz-Teilnehmer.

Während üblicherweise ein Benutzer nur ihn betreffende Termine in die durch ihn zu bedienende PIM-Anwendung eintragen kann, besteht bei einigen PIM-Anwendungen zumindest die Möglichkeit bei Besprechungsanfragen auch weiteren Personen diesen Termin als gemeinsamen Termin anzubieten, so dass die weiteren Personen Termin-Daten zu demselben Termin nicht redundant erneut eingeben müssen.

Endgeräte, die PIM-Anwendungen bereitstellen, sind dabei Arbeitsplatzrechner, PDAs (Personal Digital Assistant) oder auch Mobilfunktelefone. Ein automatischer Abgleich von Terminen zwischen Arbeitsplatzrechner und PDA oder Arbeitsplatzrechner und Mobilfunktelefon ist dabei häufig vorgesehen, so dass man auch bei Abwesenheit vom Arbeitsplatzrechner über ein tragbares Gerät an einen ursprünglich durch den Arbeitsplatzrechner verwalteten Termin erinnert werden kann. Somit kann eine gute Erreichbarkeit gewährleistet werden.

Es ist Aufgabe der Erfindung ein alternatives Verfahren anzugeben Termine zu verwalten, sowie bei diesem Verfahren zu gewährleisten, dass mit hoher Wahrscheinlichkeit eine Erinnerung an einen Termin einen Benutzer erreicht und dieser die Erinnerung vernimmt.

Gelöst wird diese Aufgabe durch ein Verfahren mit den Merkmalen des Patentanspruchs 1, sowie durch eine Netzübergangseinrichtung mit den Merkmalen des Patentanspruchs 15.

Vorteilhafte Ausführungsformen und Weiterbildungen der Erfindung sind in den abhängigen Ansprüchen angegeben.

Beim erfindungsgemäßen Verfahren zum Übermitteln einer Information an ein für Sprachkommunikation vorgesehenes Mobilteil, wird durch das Mobilteil zusammen mit einer Netzübergangseinrichtung ein Telekommunikationssystem für drahtungebundene - häufig auch als drahtlos oder schnurlos bezeichnete - Sprachkommunikation gebildet. Weiterhin wird der Netzübergangseinrichtung eine Zeitinformation und eine semantische Information - insbesondere ein zeichenkodierter Text einer Benachrichtigung oder auch eine in einer anderen Form, z.B. als Grafik, darstellbare Benachrichtigung - über ein Datennetzwerk übermittelt. Darüber hinaus wird - durch die Netzübergangseinrichtung oder durch eine weitere Servereinrichtung - vor oder nach der vorstehend genannten Übermittlung eine Auswertung auf Grundlage der Zeitinformation und einer Referenzzeitinformation durchgeführt. Die Referenzzeitinformation repräsentiert dabei insbesondere die aktuell vorliegende Uhrzeit, eine aktuell vorliegende Systemzeit an der Netzübergangseinrichtung oder der Servereinrichtung, oder eine von dieser Uhr- bzw. Systemzeit abgeleitete Zeitgröße. Bei positivem Auswertungsergebnis wird durch die Netzübergangseinrichtung das betroffene Mobilteil ermittelt. Weiterhin wird bei positivem Auswertungsergebnis von der Netzübergangseinrichtung eine die Zeitinformation und die semantische Information betreffende Nachricht über ein für die drahtlose Sprachkommunikation vorgesehenes Funknetzwerk an das ermittelte Mobilteil zur Ausgabe der semantischen Information übermittelt. Vorzugsweise ist dabei die semantische Information in der Nachricht enthalten. Die Ausgabe der semantischen Information kann daraufhin umgehend am Mobilteil erfolgen oder es kann lediglich ein Hinweis am Mobilteil ausgegeben werden, dass nach einer weiteren Benutzeraktion die Ausgabe der semantischen Information am Mobilteil oder an der Netzübergangseinrichtung erfolgen kann.

Die vorstehend oder im Patentanspruch angegebene Reihenfolge von der Übermittlung der Zeitinformation und der semantischen Information zur Netzübergangseinrichtung sowie der erfindungsgemäßen Auswertung muss dabei nicht der Abarbeitungsreihenfolge im Verfahren entsprechen. Falls ein Server die Zeitinformation und die semantischen Information erfasst und umgehend an die Netzübergangseinrichtung übermittelt, kann vorgesehen sein, zuerst die Übermittlung durchzuführen und anschließend durch die Netzübergangseinrichtung die Auswertung durchzuführen. Alternativ kann vorgesehen sein, dass ein Server die Zeitinformation und die semantischen Information erfasst und zusätzlich die Auswertung durchführt und erst bei Erkennen des positiven Auswertungsergebnisses die Übermittlung der Zeitinformation und der semantischen Information zur Netzübergangseinrichtung anstößt. Im Wesentlichen unterscheiden sich die beiden Varianten dadurch, in welcher Komponente die Auswertung durchgeführt wird und welche Komponente für die durchzuführende Auswertung die dazu benötigten Daten und Datensätze speichert und bereitstellt.

In einer vorteilhaften Weiterbildung der Erfindung, erfolgt nach dem positiven Auswertungsergebnis eine Anzeige an der Netzübergangseinrichtung.

Das erfindungsgemäße Verfahren ist dabei vorteilhaft, als dass über das Mobilteil insbesondere ein Erinnern an anstehende Termine durchgeführt werden kann, wobei das die Erinnerung ausgebende Gerät - das Mobilteil - ursprünglich nicht primär für die Verwaltung von Terminen oder das Erinnern an Termine vorgesehen ist. Die Erinnerung an Termine durch ein Mobilteil eines Telekommunikationssystems für drahtungebundene Sprachkommunikation ist dabei besonders dadurch vorteilhaft, als dass ein Mobilteil üblicherweise stets eingeschaltet ist, dauerhaft bei der Netzübergangseinrichtung registriert ist und sich mit dieser in einer Kommunikationsbeziehung befindet, und stets derart im Umfeld eines Benutzers angeordnet ist, dass durch das Mobilteil akustisch ausgegebene Signale oder Signaltöne mit hoher Sicherheit durch den Benutzer akustisch wahrgenommen werden und eine Ausgabe der Signale oder Signaltöne sowie eine die Nachricht betreffende textuelle oder auch gesprochene (z.B. erzeugt mittels Text-to-Speech Verfahren) Ausgabe am Mobilteil unmittelbar und verzögerungsfrei nach Erreichen des positiven Auswertungsergebnisses erfolgt.

Weiterhin ist vorteilhaft, dass die Übermittlung der Zeitinformation und der semantischen Information zur Netzübergangseinrichtung über das Datennetzwerk - z.B. das Internet - erfolgt, weil dadurch eine einfache Bedienung zum Setzen der Zeitinformation und der semantischen Information - z.B. über eine auf einem Arbeitsplatzrechner dargestellten Webseite - ermöglicht werden kann. Außerdem ermöglicht dies, dass neben dem Benutzer des Mobilteils auch weitere Personen die Zeitinformation und die semantische Information für das Mobilteil des Benutzers setzen können, so dass diese weiteren Personen beispielsweise Termine setzen können, die den Benutzer des Mobilteils betreffen und an die der Benutzer erinnert werden soll.

Die erfindungsgemäße Netzübergangseinrichtung bietet vorzugsweise zusätzlich Funktionen einer Funk-Basisstation, die für ein oder mehrere Mobilteile einen Dienst zur Kommunikation anbietet, wobei die Mobilteile vorzugsweise untereinander und/oder zu telekommunikationssystem-externen Endeinrichtungen in Verbindung treten können. Vorzugsweise sind die Funk-Basisstation und die Mobilteile für eine Übermittlung bzw. Ausgabe von Sprache vorgesehen, wobei zumindest die Mobilteile neben Mitteln zur Ein- und Ausgabe von Sprache vorzugsweise ebenso Mittel zur Ein- und Ausgabe von Text und/oder Grafik aufweisen.

Somit kann in einer vorteilhaften Weiterbildung für eine beim Mobilteil empfangene Nachricht ein aus der Zeitinformation und/oder der semantischen Information gebildeter bzw. abgeleiteter Text am Mobilteil ausgegeben werden, vorzugsweise als Textausgabe in einem Display oder nach so genannter Text-To-Speech-Konvertierung als Sprachausgabe. Die Ausgabe kann dabei umgehend nach Empfang der erfindungsgemäßen Nachricht erfolgen. Alternativ kann auch nur eine Benachrichtigung ausgegeben werden, dass ein Termin ansteht und die Textausgabe bzw. die Sprachausgabe durch eine Benutzeraktion am Mobilteil angestoßen werden kann.

Darüber hinaus kann in einer weiteren vorteilhaften Weiterbildung des Verfahrens aufgrund des positiven Auswertungsergebnisses zusätzlich eine Ausgabe einer Benachrichtigung - eventuell auch nur ein Hinweis-Ton oder eine Ansteuerung einer Leuchtdiode - an der Netzübergangseinrichtung vorgesehen sein.

Die Funk-Übertragung zwischen Funk-Basisstation als Netzübergangseinrichtung und Mobilteil erfolgt in einer vorteilhaften Weiterbildung des Verfahrens gemäß dem DECT-Standard (DECT: Digital European Cordless Telephone). Jedoch ist das erfindungsgemäße Verfahren nicht auf diesen Standard beschränkt, so dass auch weitere proprietäre oder standardisierte Übertragungsverfahren und Protokolle denkbar sind.

In einer vorteilhaften Weiterbildung der Erfindung, kommuniziert das Mobilteil gemäß dem DECT-Standard mit der Netzübergangseinrichtung.

In einer weiteren vorteilhaften Weiterbildung der Erfindung, ist eine Servereinrichtung vorgesehen, mittels der eine Terminverwaltung bereitgestellt wird. Durch die Servereinrichtung kann vorgesehen sein, neu anzulegende Termine als Datensätze abzulegen, bei neu anzulegenden Terminen durch Analyse von bereits eingerichteten Datensätzen zu überprüfen, ob es Überschneidungen oder Kollisionen mit bereits eingetragenen Terminen gibt und Datensätze zu bereits abgelaufenen Terminen zu löschen. Die Servereinrichtung ist dabei vorzugsweise ein zentraler Rechner, der für verschiedene Personen Termine verwaltet, wobei dabei idealerweise eine strikte Trennung der Termine der jeweiligen Personen beachtet wird. Vorzugsweise umfasst die Servereinrichtung weiterhin eine Autorisierungsfunktion, mittels der überprüft wird, ob ein Zugriff auf die Servereinrichtung zur Abfrage, zum Eintragen oder zum Konfigurieren von Terminen berechtigt ist. In einer Ausgestaltung kann beispielsweise vorgesehen sein, dass einer Anzahl von Personen eine Berechtigung vergeben wird, für den Benutzer über die Servereinrichtung Termine zu definieren und/oder zu administrieren. So kann vorgesehen werden, dass ein Benutzer seinen behandelnden Ärzten die Berechtigung vergibt, ihn betreffende Termine bezüglich ärztlicher Behandlungen in den benutzerindividuellen Terminkalender zu setzen. Bei Integration einer entsprechenden Konfigurationssoftware in eine von Arztpraxen verwendete Arzt-Software kann somit erreicht werden, dass durch den Arzt oder dessen Personal lediglich einmal ein Termin eintragen werden muss und daraufhin einerseits der Terminkalender innerhalb der Arzt-Software sowie der im Rahmen der Erfindung bereitgestellte Terminkalender des Benutzers aktualisiert wird. Ein manuelles Übertragen von Terminen ist in diesem Fall nicht notwendig.

Vorzugsweise kann mittels der Servereinrichtung ein häufig als Portal bezeichneter Internetdienst bereitgestellt werden, der potentiellen Anwendern Webseiten zum Konfigurieren von Terminen bereitstellt. Eine Verbindung von einer Endeinrichtung eines der Anwender zur Servereinrichtung kann dabei mittels webbasierten Übertragungsmittel, vorzugsweise über standardisierte Protokolle, erfolgen. Beispielsweise können durch die Endeinrichtung von der Servereinrichtung auf HTML (Hyper Text Markup Language) basierte Webseiten abgerufen werden und dem Anwender angezeigt werden. Über diese Webseiten erfolgt dann die Autorisierung des Anwenders und die Konfiguration der Termine. Eine Übertragung von in der HTML-Seite eingegebenen, den Termin spezifizierenden Formulardaten kann dann beispielsweise mittels der HTML-Anweisungen GET oder PUT erfolgen. Neben dieser beispielhaften genannten Implementierungsmöglichkeit sind beliebige andere so genannte Client-Server-Lösungen denkbar.

In einer vorteilhaften Weiterbildung der Erfindung, wird die Übermittlung der ersten Meldung mit webbasierten Mitteln durchgeführt.

Bei Verwendung einer zentralen Servereinrichtung und bei der Möglichkeit für eine Mehrzahl von Benutzern Konfigurationen von Terminen durch die Servereinrichtung vorzunehmen, kann in einer vorteilhaften Weiterbildung vorgesehen sein, dass wie bereits vorstehend angedeutet, von einer Endeinrichtung eine die Zeitinformation und die semantische Information umfassende erste Meldung - insbesondere die genannten HTML-Formular-Inhalte - über das Datennetzwerk an die Servereinrichtung übermittelt wird. Durch die Servereinrichtung wird daraufhin für die empfangene erste Meldung ein Termin-Datensatz erzeugt und eine Adressinformation - z.B. eine IP-Adresse (IP: Internet Protocol) - ermittelt. Die Adressinformation spezifiziert dabei die Netzübergangseinrichtung, die dem jeweiligen Benutzer zugeordnet ist. Umgehend oder alternativ bei Erreichen eines den Termin betreffenden Erinnerungszeitpunktes wird von der Servereinrichtung eine die Zeitinformation und die semantische Information umfassende zweite Meldung über das Datennetzwerk unter Verwendung der ermittelten Adressinformation an die Netzübergangseinrichtung übermittelt.

Zur Ermittlung der Adressinformation kann es vorgesehen sein, dass für jeden Benutzer für den bei der Servereinrichtung Termine konfiguriert werden können mindestens eine Adressinformation mindestens einer Netzübergangseinrichtung konfiguriert ist oder dass mindestens eine Netzübergangseinrichtung bei der Servereinrichtung registriert ist. Darüber hinaus kann zusätzlich konfiguriert werden, zu welchem der der Netzübergangseinrichtung zugeordneten Mobilteile die erfindungsgemäße Nachricht übermittelt werden soll, oder ob die Nachricht an alle zur Netzübergangseinrichtung zugeordneten Mobilteile übermittelt gehört.

Alternativ kann mittels eines so genannten Polling-Verfahrens die Übertragung der zweiten Meldung durch die abfragende Netzübergangseinrichtung angestoßen werden. Zu diesem Zweck ist vorzugweise eine Adressinformation der Servereinrichtung bei der Netzübergangseinrichtung konfiguriert.

Die erfindungsgemäße Zeitinformation spezifiziert vorzugsweise einen Termin inklusive Anfangs- und Endzeitpunkt des Termins und umfasst zusätzlich eine Information, ob und mit welchem zeitlichen Vorlauf eine Erinnerung an den Termin ausgegeben werden soll. Dabei ist es weitgehend irrelevant, ob zum Beispiel der Endzeitpunkt und der Erinnerungszeitpunkt als absolutes Datum und Uhrzeit angegeben sind oder ob diese Zeitpunkte als positive oder negative Differenz zu einem Bezugswert - vorzugsweise dem Anfangszeitpunkt - angegeben sind. Weiterhin kann als Teil der Zeitinformation eine Information darüber umfasst sein, in welchem zeitlichen Abstand zu wiederholende Termine wiederholt werden.

In einer vorteilhaften Weiterbildung der Erfindung, umfasst die Zeitinformation ein Datum eines Beginns eines Termins, und/oder eine Uhrzeit des Beginns des Termins, und/oder eine Zeitdauer zwischen dem Beginn und Ende des Termins, und/oder mindestens ein Wertepaar eines Datums und einer Uhrzeit, wobei das jeweilige Wertepaar einen Zeitpunkt für eine Erinnerung an den Termin repräsentiert, und/oder eine Information darüber, in welchem zeitlichen Abstand zu wiederholende Termine wiederholt werden.

Somit besteht beispielweise die Möglichkeit anzugeben, dass ein Termin am 26. März 2008, 11 Uhr beginnt, der Termin eine Laufzeit von 2 Stunden hat, und dass über das Mobilteil eine Erinnerung auf diesen Termin 1 Stunde vorher - also 26. März 2008, 10 Uhr - ausgegeben werden soll.

In einer vorteilhaften Weiterbildung der Erfindung, weist die Netzübergangseinrichtung eine DECT-konforme Schnittstelle zur Anbindung mindestens eines Mobilteils und eine Schnittstelle in ein Telefonnetz und/oder eine Schnittstelle in ein Datennetzwerk auf.

Die vorliegende Erfindung und deren Weiterbildungen werden nachfolgend im Rahmen eines Ausführungsbeispiels an Hand einer Figur näher erläutert.

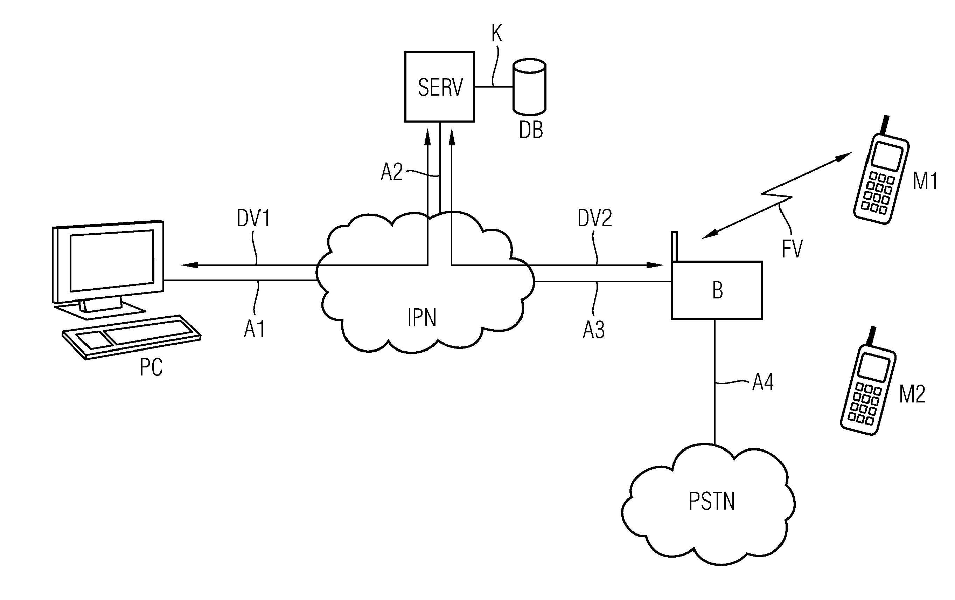

Dabei zeigt in schematischer Darstellung die
- Figur 1: ein Kommunikationssystem mit den am erfindungsgemä- ßen Verfahren beteiligten Einrichtungen sowie im Kommunikationssystem auftretende Meldungen.

In Figur 1 ist in schematischer Darstellung ein verteiltes Kommunikationssystem dargestellt, bei dem über ein Datennetzwerk IPN - vorzugsweise ein paketbasiertes Netzwerk wie das globale Internet oder ein abgeschlossenes Intranet - ein Arbeitsplatzrechner PC als erfindungsgemäße Endeinrichtung, eine Servereinrichtung SERV und eine Basisstation B als erfindungsgemäße Netzübergangseinrichtung miteinander kommunizieren können. Zu diesem Zweck ist der Arbeitsplatzrechner PC über die Anbindung A1, die Servereinrichtung SERV über die Anbindung A2 und die Basisstation B über die Anbindung A3 mit dem Datennetzwerk IPN gekoppelt.

Über das Datennetzwerk IPN und die Anbindungen A1, A2, A3 sind Datenübertragungen zwischen den vorstehend bezeichneten Komponenten möglich. Diese Datenübertragungen sind in Figur 1 als Doppelpfeile dargstellt und werden als Datenverbindungen DV1 und DV2 bezeichnet.

Die Servereinrichtung SERV weist als externe Komponente oder auch als - nicht dargestellte - interne Komponente eine Datenbank DB auf, die im vorliegenden Ausführungsbeispiel über eine Kopplung K an die Servereinrichtung SERV angebunden ist. Die Datenbank DB ist dabei dafür vorgesehen, Datensätze bezüglich konfigurierter Anwender und Datensätze bezüglich zu erinnernde Termine zu speichern.

Die Basisstation B stellt neben dem Zugang zum Datennetzwerk IPN via die Anbindung A3 weiterhin eine Anbindung A4 an ein öffentliches Telefonnetz PSTN bereit, so dass bei der Basisstation B ein- und ausgehende Telefongespräche und -signalisierungen über diese Schnittstelle übertragen werden.

Weiterhin sind in Figur 1 zwei an der Basisstation B konfigurierte Mobilteile M1 und M2 - auch als schnurlose Telefone zu bezeichnen - dargestellt, die zusammen mit der Basisstation B ein Telekommunikationssystem für drahtungebundene Sprachkommunikation bilden. Es sei angenommen, dass die Basisstation B und die Mobilteile M1 und M2 derart konfiguriert sind, dass Telefongespräche zwischen den Mobilteilen M1 und M2 vermittelt werden können, sowie zwischen jeweils einem der Mobilteile M1, M2 und einer über das öffentliche Telefonnetz PSTN verbindbaren Sprachendeinrichtung. Weiterhin sei angenommen, dass die Mobilteile M1 und M2 innerhalb des aufgrund von Dämpfung und Abschattungen beschränkten Funkversorgungsbereich der Basisstation B angeordnet sind, so dass eine Kommunikation zwischen dem jeweiligen Mobilteil M1, M2 und der Basisstation B erfolgreich durchgeführt werden kann.

Neben der reinen Sprach-Nutzdatenverbindung wird angenommen, dass zwischen der Basisstation B und einem jeweiligen Mobilteil M1, M2 auch Signalisierungen und Nicht-Sprach-Übertragungen übermittelt werden. Dies ist in Figur 1 an Hand der Funkverbindung FV zwischen der Basisstation B und dem ersten Mobilteil M1 angedeutet.

Es sei angenommen, dass die Servereinrichtung SERV zwei wesentliche Funktionen erfüllt: einerseits werden durch die Servereinrichtung SERV für verschiedene Personen P1, P2, ..., Px - die Personen sind in der Figur 1 nicht dargestellt - getrennt voneinander Termin-Datensätze eines elektronischen Termin-Kalenders verwaltet und andererseits wird eine Schnittstelle zu einem beliebigen Arbeitsplatzrechner PC eines Anwenders ANW - der Anwender ANW ist ebenfalls nicht dargestellt - bereitgestellt, über die neue Termin-Datensätze angelegt werden können oder bestehende Termin-Datensätze abgefragt und/oder modifiziert werden können. Darüber hinaus stellt die Servereinrichtung SERV vorzugsweise Mittel bereit, eine Überprüfung der Autorisierung des Anwenders ANW für das Konfigurieren von eine bestimmte Person Px betreffenden Terminen vorzunehmen.

Ausgangssituation sei, dass der Anwender ANW über den Arbeitsplatzrechner PC einen neuen Termin für die Person P1 konfigurieren möchte. Weiterhin sei vorausgesetzt, dass der Anwender ANW für den Zugriff auf den elektronischen TerminKalender der Person P1 freigeschaltet ist und dass bereits verschiedene Termine für die Person P1 konfiguriert sind, die als Termin-Datensätze in der Datenbank DB abgespeichert sind. Darüber hinaus sei das Mobilteil M1 der Person P1 zugeordnet und wird von dieser bedient.

Erfolgt nun durch den Anwender ANW über den Arbeitsplatzrechner PC ein Zugriff auf die Servereinrichtung SERV beispielsweise mittels eines Webzugriffs so wird durch die Servereinrichtung SERV eine Einwähl-Maske an den Arbeitsplatzrechner PC übermittelt, in der der Anwender ANW eine Kennung, ein Passwort und die Person P1 spezifizierende Informationen - vorzugsweise der Name der Person P1 - eingegeben und anschließend eine Übertragung dieser Angaben an die Servereinrichtung SERV anstoßen kann. Durch die Servereinrichtung SERV wird daraufhin ein Autorisierungsvorgang ausgelöst, bei dem überprüft wird, ob das angegebene Passwort zur angegebenen Kennung korrekt ist und ob die angegebene Kennung für die Konfigurierung von die Person P1 betreffenden Termin-Datensätzen freigegeben ist. Im Folgenden sei angenommen, dass die Autorisierung positiv verläuft und dem Anwender ANW ein Zugriff gewährt wird.

Als Folge davon wird dem Anwender ANW eine durch die Servereinrichtung SERV generierte Maske zum Konfigurieren von Terminen für die Person P1 angezeigt.

Details wie eine derartige Konfigurationsoberfläche aussehen könnte werden im Folgenden nicht weiter erläutert, da dies nicht erfindungswesentlich ist. Vorzugsweise können bei den Konfigurationsschritten auch bereits für die Person P1 eingetragene Termine angezeigt werden, so dass dem Anwender ANW eine umfassende Darstellung von potentiell kollidierenden Terminen erhält. Und sofern vorzugsweise ausnahmslos alle Anwender über die Servereinrichtung SERV Termine für die Person P1 konfigurieren, stellt der über die Servereinrichtung SERV abzufragende elektronische Terminkalender für Person P1 eine exakte Darstellung von zur Verfügung stehenden und bereits vergebenen Zeitabschnitten bereit.

Die Konfiguration des Termins erfolgt durch mindestens eine Datenübertragung über die Datenverbindung DV1 zwischen dem Arbeitsplatzrechner PC und der Servereinrichtung SERV über das Datennetzwerk IPN. Zum Arbeitsplatzrechner PC zu übermittelnde Daten werden dabei von der Servereinrichtung SERV bereitgestellt, eventuell unter Abfrage von in der Datenbank DB gespeicherten Termin-Datensätzen. Vom Arbeitsplatzrechner PC an die Servereinrichtung SERV zu übermittelnde Daten sind dabei insbesondere eine Zeitinformation - beispielsweise der Startzeitpunkt des Termins, die zeitliche Länge des Termins und ein Erinnerungszeitpunkt - bezüglich des Termins und eine zugehörige semantische Information. Bei der semantischen Information handelt es sich vorzugsweise um einen beschreibenden Text zu dem Termin, der besagt um was für einen Termin es sich handelt, an welchem Ort der Termin stattfindet, etc.

Wird die Konfiguration eines neuen Termins nach im Rahmen der Datenverbindung DV1 vollzogenen Übermittlung der Zeitinformation und der semantischen Information abgeschlossen, so wird durch die Servereinrichtung SERV ein neuer Termin-Datensatz in der Datenbank DB generiert. Damit ist das Generieren des neuen Termin-Datensatzes abgeschlossen. Die Datenverbindung DV1 kann beendet werden.

Informationen zum neu erzeugten Termin sollen erfindungsgemäß nun bis zum ersten Mobilteil M1 propagiert werden. Hierbei gibt es verschiedene Ausgestaltungen: Durch die Servereinrichtung SERV können die Daten direkt nach Generieren des Termin-Datensatzes an die Basisstation B übermittelt werden. Alternativ kann durch die Servereinrichtung SERV erst bei Eintreten des Termins bzw. eines Erinnerungszeitpunktes eine Übertragung an die Basisstation B erfolgen. Eine weitere Alternative besteht darin, dass die Servereinrichtung SERV die Übertragung nicht von sich aktiv vornimmt, sondern dass eine Übertragung zur Basisstation B durch die Basisstation B selbst mittels regelmäßiger Abfrage bei der Servereinrichtung SERV - auch Polling genannt - angestoßen wird, woraufhin dann die Servereinrichtung SERV Daten bezüglich neu konfigurierter beziehungsweise geänderter Termine überträgt. Diese letztgenannte Alternative wird im Folgenden für das Ausführungsbeispiel weiter verfolgt.

Die durch die Personen P1, P2, ..., Px betriebenen Basisstationen seien so konfiguriert, dass sie in regelmäßigen Abständen bei der Servereinrichtung SERV über das Datennetzwerk IPN eine Abfrage absetzen, ob neu konfigurierte und/oder geänderte Termine bei der Servereinrichtung SERV vorliegen. Zu diesem Zweck sei angenommen, dass eine Adresse der Servereinrichtung SERV bei der jeweiligen Basisstation konfiguriert ist bzw. durch die jeweilige Basisstation ermittelbar ist. Der zeitliche Abstand zwischen zwei aufeinanderfolgenden Abfragen kann je nach Anbindung der jeweiligen Basisstation ans Datennetzwerk IPN in einer hohen Frequenz erfolgen - beispielsweise alle 5 Minuten - oder in einer niedrigen Frequenz - z.B. einmal am Tag. Folglich wird durch die Basisstation B zu einem konfigurierten Zeitpunkt über die Datenverbindung DV2 eine Abfrage-Nachricht an die Servereinrichtung SERV abgeschickt, um für alle zur Basisstation B zugeordneten Mobilteile M1, M2 und/oder Personen - im Ausführungsbeispiel nur P1 - Informationen bezüglich gespeicherter Termine abzufragen.

Für die Abfrage-Nachricht wird durch die Servereinrichtung SERV vorzugsweise auch eine Berechtigung überprüft, ob die Basisstation B berechtigt ist, die die Person P1 betreffenden personenindividuellen Daten abzufragen. Im vorliegenden Ausführungsbeispiel sei dies erfüllt, so dass durch die Servereinrichtung SERV unter Abfrage der Datenbank DB neue und/oder geänderte Termindatensätze ermittelt werden können. Für diese Termindatensätze wird im Rahmen der Datenverbindung DV2 mindestens eine Antwort-Nachricht an die Basisstation B generiert, die zumindest die Zeitinformation und die semantische Information der jeweiligen ermittelten Termindatensätze umfasst.

Zur einfacheren Darstellung, sei angenommen, dass lediglich ein Datensatz vorliegt und es sich hierbei um einen komplett neuen Termin handelt.

Die Basisstation B empfängt daraufhin die übermittelte Antwort-Nachricht und erfasst die darin enthaltenen Daten und speichert diese lokal in einem Speicher der Basisstation B als Datensatz ab. Der Speicher kann dabei ein spezifisch für das Ablegen von Termin-Informationen vorgesehener Speicher sein oder ein bereits existierender Speicher, der z.B. ursprünglich für Sprachnachrichten, Kurzmitteilungen oder Rückruf-Informationen vorgesehen ist. In diesen Speicher werden nun insbesondere die Zeitinformation und die semantische Information abgespeichert, zugeordnet zur Person P1 und/oder zu dessen Mobilteil M1.

Durch die Basisstation B erfolgt nun erfindungsgemäß eine Auswertung auf Grundlage der gespeicherten Zeitinformation und einer Referenzzeitinformation. Vorzugsweise wird aus der gespeicherten Zeitinformation der Erinnerungszeitpunkt ausgelesen und mit der aktuell vorliegenden Uhrzeit, die der Basisstation B als konfigurierte Systemzeit vorliegt, verglichen. Diese Auswertung kann dabei wiederholt und regelmäßig stattfinden, z.B. jede Minute. In diesem Fall ist ein positives Auswertungsergebnis, wenn die Referenzzeitinformation durch die zu vergleichende Information erreicht oder überschritten wird.

Alternativ kann auch ein Zeitgeber gesetzt werden, so dass die erfindungsgemäße Auswertung das Setzen des Zeitgebers und das Prüfen auf Ablauf des Zeitgebers umfasst. Ein positives Auswertungsergebnis ist in diesem Fall der Ablauf des Zeitgebers.

Ist nun der Erinnerungszeitpunkt erreicht oder überschritten, so ergibt sich durch eine der genannten Vorgehensweisen ein positives Auswertungsergebnis. Falls noch nicht geschehen, wird daraufhin der für das positive Auswertungsergebnis verantwortliche Datensatz aus dem Speicher der Basisstation B ausgelesen, insbesondere die gespeicherte Zeitinformation und die semantische Information. Weiterhin wird ermittelt oder ausgelesen, an welchem Mobilteil der Hinweis auf den Termin ausgegeben werden soll. Dies ist im vorliegenden Ausführungsbeispiel das durch Person P1 bedienbare Mobilteil M1.

Von der Basisstation B wird daraufhin eine die Zeitinformation und die semantische Information umfassende oder die semantische Information zumindest betreffende Nachricht über das für die drahtlose Sprachkommunikation vorgesehene Funknetzwerk über die Funkverbindung FV an das Mobilteil M1 übermittelt, damit an dem Mobilteil M1 ein Hinweis auf den Termin ausgegeben werden kann.

Ausgelöst durch den Eingang dieser Nachricht kann das Mobilteil M1 einen oder mehrere Signaltöne, Musik oder einen gesprochenen Hinweistext ausgeben und einen oder mehrere Anzeigeelemente verändern. Letztgenanntes kann durch Illuminieren einer Leuchtdiode oder durch Anzeigen eines Hinweistextes oder Symbols im Display erfolgen. Vorzugsweise erfolgt ein akustisches Signal zusammen mit einer Veränderung eines Grafikfelds im Display. Beispielsweise wird ein einem so genannten Soft-Key zugeordnetes Grafikfeld zusammen mit der Belegung des Soft-Keys verändert, dass ein verändertes Piktogramms für einen Termin angezeigt wird und durch Betätigung des Soft-Keys die semantische Information und die Zeitinformation - evtl. nach Anpassung an die Fähigkeiten des Displays - ausgegeben wird.

Beispielsweise kann somit für eine Zeitinformation, dass ein Arzttermin am 1. August 2008 um 11 Uhr stattfindet und eine Erinnerung 2 Stunden vorher erfolgen soll, sowie für eine semantische Information, dass für Arzt Dr. XY der Termin aufgenommen wurde, am 1. August 2008 um 9 Uhr die folgende Ausgabe am Display erscheinen: "Erinnerung an Termin: 11 Uhr - Arzt Dr. XY". Die Ausgabe entspricht dabei vorzugsweise exakt den ursprünglich durch den Anwender ANW über den Arbeitsplatzrechner PC eingegebenen Daten.

Somit ermöglicht das erfindungsgemäße Verfahren, dass einer Person - die Person P1 - konfiguriert durch eine andere Person - den Anwender ANW - eine Information zu einem vorgebbaren Zeitpunkt angezeigt wird. Dabei ist insbesondere vorteilhaft, dass zur Ausgabe ein bereits zur Verfügung stehendes Mobilteil verwendetet werden kann.

Weiterhin ist hervorzuheben, dass die Person P1 keinerlei manuelle Aktionen durchführen muss. Jegliche Benutzeraktion zum Setzen eines Termins für die Person P1 wird durch den Anwender ANW ausgeführt.

In einer alternativen Ausgestaltung, kann dem Mobilteil M1 durch die Basisstation B lediglich eine Hinweis-Information, die die Zeitinformation und die semantische Information betreffen, übermittelt werden, dass die Zeitinformation und die semantische Information für eine Ausgabe am Mobilteil M1 abgeholt werden können. Beispielsweise wird nach Eingang der Hinweis-Information beim Mobilteil M1 ein Signalton ausgegeben und eine Leuchtdiode im Sinne es so genannten "Message Waiting Indicators" aktiviert, wodurch darauf hingewiesen wird, dass Informationen zum Termin abgeholt werden können, beispielsweise durch Drücken einer dafür vorgesehenen Taste. Daraufhin wird eine Abfrage-Meldung an die Basisstation B abgesetzt, wodurch die Basisstation B die angeforderten Daten - also insbesondere die Zeitinformation und die semantische Information - übermittelt, damit diese am Mobilteil M1 ausgegeben werden. Diese Vorgehensweise ist insbesondere vorteilhaft, wenn das Mobilteil kein oder lediglich ein kleines Display besitzt und die Ausgabe der Zeitinformation und der semantischen Information erst nach einer Wandlung in Sprache als Sprachnachricht ausgegeben werden. Weiterhin ist dies vorteilhaft, wenn die semantische Information durchwegs - also am Arbeitsplatzrechner PC, an der Servereinrichtung SERV und an der Basisstation B - als Audio-Daten vorliegt. Jedoch ist dies nicht zwingend notwendig, da auch eine Text-to-Speech-Konvertierung denkbar ist.

In einer alternativen Ausgestaltung oder zusätzlich kann bei positivem Auswertungsergebnis auch an der Basisstation B eine akustische - über einen Lautsprecher der Basisstation B - oder optische - über ein Display der Basisstation B - Ausgabe erfolgen, die auf einen Termin hinweist. Dies ist insbesondere bei Basisstationen von Bedeutung, in denen zusätzlich ein Festnetztelefon integriert ist und folglich eine Tastatur vorhanden ist, um auf einfache Weise den Termin abzufragen und eine Ausgabe auszulösen.

Zusammenfassend sei anzumerken, dass die vorstehende Darstellung anhand von Terminen und einer zentralen Terminverwaltung lediglich als Beispiel anzusehen ist. Das erfindungsgemäße Verfahren ist darüber hinaus für verschiedene Anwendungen einsetzbar, in denen eine Ausgabe an einem Mobilteil sinnvoll erscheint und als auslösendes Ereignis eine Auswertung auf Grundlage einer Zeitinformation und einer Referenzzeitinformation erfolgt.

Weiterhin können Termine darüber hinaus die Verwendung von technischen Ressourcen betreffen, wie die Reservierung eines Telefon-Konferenz-Servers für eine Telefonkonferenz zu einem bestimmten Zeitpunkt für bestimmte Konferenz-Teilnehmer, wobei vorzugsweise eine Kopplung zum Telefon-Konferenz-Server vorliegt, um Ressourcen und/oder Bandbreite beim Telefon-Konferenz-Server zu reservieren.

## Patentansprüche

1. Verfahren zum Übermitteln einer Information an ein für Sprachkommunikation vorgesehenes Mobilteil (M1), das zusammen mit einer Netzübergangseinrichtung (B) ein Telekommunikationssystem für drahtungebundene Sprachkommunikation bildet, wobei
- der Netzübergangseinrichtung (B) eine Zeitinformation und eine semantische Information über ein Datennetzwerk (IPN) übermittelt wird,
- eine Auswertung auf Grundlage der Zeitinformation und einer Referenzzeitinformation durchgeführt wird,
- bei positivem Auswertungsergebnis durch die Netzübergangseinrichtung (B) das betroffene Mobilteil (M1) ermittelt wird und von der Netzübergangseinrichtung (B) eine die Zeitinformation und die semantische Information betreffende Nachricht (FV) über ein für die drahtlose Sprachkommunikation vorgesehenes Funknetzwerk an das Mobilteil (M1) zur Ausgabe der semantischen Information übermittelt wird.

2. Verfahren nach Anspruch 1,
**dadurch gekennzeichnet,**
**dass**
- durch die Netzübergangseinrichtung (B) die zur Netzübergangseinrichtung (B) übermittelte Zeitinformation und die übermittelte semantische Information in einem Datensatz zu einem Mobilteil (M1) zugeordnet abgespeichert werden,
- die Auswertung durch die Netzübergangseinrichtung (B) durchgeführt wird und für die Auswertung die durch die Netzübergangseinrichtung (B) gespeicherte Zeitinformation verwendet wird,
- für das Übermitteln der Nachricht (FV) an das betroffene Mobilteil (M1) durch die Netzübergangseinrichtung (B) der gespeicherte Datensatz ausgelesen wird, für den das positive Auswertungsergebnis ermittelt wurde.

3. Verfahren nach Anspruch 2,
**dadurch gekennzeichnet,**
**dass** die Übermittlung der Zeitinformation und der semantische Information über das Datennetzwerk (IPN) an die Netzübergangseinrichtung (B) durch eine Servereinrichtung (SERV) durchgeführt wird.

4. Verfahren nach Anspruch 1,
**dadurch gekennzeichnet,**
**dass**
- durch eine Servereinrichtung (SERV) die zur Netzübergangseinrichtung (B) zu übermittelnde Zeitinformation und die zur Netzübergangseinrichtung (B) zu übermittelnde semantische Information in einem Datensatz zur Netzübergangseinrichtung (B) zugeordnet abgespeichert werden,
- die Auswertung durch die Servereinrichtung (SERV) durchgeführt wird und für die Auswertung die durch die Servereinrichtung (SERV) gespeicherte Zeitinformation verwendet wird,
- für das Übermitteln der Nachricht (FV) an das betroffene Mobilteil (M1) durch die Servereinrichtung (SERV) der gespeicherte Datensatz ausgelesen wird, für den das positive Auswertungsergebnis ermittelt wurde, und für diesen durch die Servereinrichtung (SERV) die Übermittlung der Zeitinformation und der semantische Information über das Datennetzwerk (IPN) an die Netzübergangseinrichtung (B) durchgeführt wird.

5. Verfahren nach einem der Ansprüche 3 oder 4,
**dadurch gekennzeichnet, dass** die Übermittlung der Zeitinformation und der semantischen Information zur Netzübergangseinrichtung (B) umfasst, dass
- von einer Endeinrichtung (PC) eine die Zeitinformation und die semantische Information umfassende erste Meldung (DV1) über das Datennetzwerk (IPN) an die Servereinrichtung (SERV) übermittelt wird,
- durch die Servereinrichtung (SERV) ausgelöst durch die empfangene erste Meldung (DV1) eine Adressinformation ermittelt wird,
- von der Servereinrichtung (SERV) eine die Zeitinformation und die semantische Information umfassende zweite Meldung (DV2) über das Datennetzwerk (IPN) unter Verwendung der ermittelten Adressinformation an die Netzübergangseinrichtung (B) übermittelt wird.

6. Verfahren nach einem der Ansprüche 3 oder 4,
**dadurch gekennzeichnet,**
**dass** die Übermittlung der Zeitinformation und der semantischen Information zur Netzübergangseinrichtung (B) umfasst, dass
- von einer Endeinrichtung (PC) eine die Zeitinformation und die semantische Information umfassende erste Meldung (DV1) über das Datennetzwerk (IPN) an die Servereinrichtung (SERV) übermittelt wird,
- von der Netzübergangseinrichtung (B) eine wiederholende Abfrage an die Servereinrichtung (SERV) abgesetzt wird,
- aufgrund des Empfangens der wiederholenden Abfrage von der Servereinrichtung (SERV) eine die Zeitinformation und die semantische Information umfassende zweite Meldung (DV2) über das Datennetzwerk (IPN) an die Netzübergangseinrichtung (B) übermittelt wird.

7. Verfahren nach einem der vorhergehenden Ansprüche, **dadurch gekennzeichnet,**
**dass** das Mobilteil (M1) dauerhaft bei der Netzübergangseinrichtung (B) registriert ist und das registrierte Mobilteil (M1) nach dem Auswerten die Nachricht (FV) verzögerungsfrei empfängt.

8. Verfahren nach einem der vorhergehenden Ansprüche, **dadurch gekennzeichnet,**
**dass**
mehrere Mobilteile (M1, M2) zur Netzübergangseinrichtung (B) zugeordnet sind, und
basierend auf der Adressinformation und/oder einer weiteren in der zweiten Meldung (DV2) enthaltenen Information durch die Netzübergangseinrichtung (B) ermittelt wird, zu welchem der mehreren Mobilteilen (M1, M2) der Datensatz zugeordnet abgespeichert wird.

9. Verfahren nach einem der vorhergehenden Ansprüche,
**dadurch gekennzeichnet,**
**dass** für die beim Mobilteil (M1) empfangene Nachricht (FV) die Zeitinformation und die semantische Information an einem Display des Mobilteils (M1) ausgegeben wird.

10. Verfahren nach einem der Ansprüche 1 bis 8,
**dadurch gekennzeichnet,**
**dass** aufgrund des Empfangens der Nachricht (FV) an dem Mobilteil (M1) mittels einer Ausgabe angezeigt wird, dass die Zeitinformation und die semantische Information zur Abfrage vorliegen.

11. Verfahren nach einem der vorhergehenden Ansprüche,
**dadurch gekennzeichnet,**
**dass** nach dem positiven Auswertungsergebnis die Zeitinformation und die semantische Information aus dem Datensatz extrahiert wird und in einen Meldungsspeicher für Kurztextmitteilungen oder in einem Speicher für Mitteilungen einer Anrufbeantworterfunktion eingetragen werden.

12. Verfahren nach einem der vorhergehenden Ansprüche, sofern auf einen der Ansprüche 5 oder 6 rückbezogen,
**dadurch gekennzeichnet,**
**dass** durch die Servereinrichtung (SERV)
- ein personenindividueller elektronischer Terminkalender derart verwaltet wird, dass für unterschiedliche Teilnehmer getrennt voneinander Datensätze des elektronischen Terminkalenders abgespeichert und/oder aktualisiert werden, und
- die in der eingehenden ersten Meldung (DV1) enthaltene Zeitinformation derart ausgewertet wird, dass eine zeitliche Überlappung mit einem bereits für den Teilnehmer in einem dem Teilnehmer zugehörigen Datensatz gespeicherten Termin des elektronischen Terminkalenders erkannt wird.

13. Verfahren nach Anspruch 12,
**dadurch gekennzeichnet,**
**dass**, sofern keine zeitliche Überlappung erkannt wird, ein neuer Eintrag in den personenindividuellen elektronischen Terminkalender für die in der eingehenden ersten Meldung (DV1) enthaltene Zeitinformation abgespeichert wird.

14. Verfahren nach einem Ansprüche 12 oder 13,
**dadurch gekennzeichnet,**
**dass**
- für die erste Meldung (DV1) an der Endeinrichtung eine Autorisierung eines Zugriffs auf den personenindividuellen elektronischen Terminkalender durchgeführt wird, und
- durch die Servereinrichtung (SERV) der Zugriff erst nach erfolgreicher Autorisierung zugelassen wird.

15. Netzübergangseinrichtung (B), die zusammen mit einem für Sprachkommunikation vorgesehenes Mobilteil (M1) ein Telekommunikationssystem für drahtungebundene Sprachkommunikation bildet, umfassend
- einer Empfangseinheit zum Empfangen einer Zeitinformation und einer semantischen Information, die an die Netzübergangseinrichtung (B) über ein Datennetzwerk (IPN) übermittelt werden,
- Auswertungseinheit zum Durchführen einer Auswertung auf Grundlage der übermittelten Zeitinformation und einer Referenzzeitinformation, wobei die Auswertungseinheit derart ausgestaltet ist, dass bei positivem Auswertungsergebnis das betroffene Mobilteil (M1) ermittelt und eine Übermittlungseinheit angesprochen wird,
- Übermittlungseinheit zum Übermitteln einer die Zeitinformation und die semantische Information betreffenden Nachricht (FV) über ein für die drahtlose Sprachkommunikation vorgesehenes Funknetzwerk an das ermittelte Mobilteil (M1) zur Ausgabe der semantischen Information.
